# EUROPÄISCHE PATENTSCHRIFT

(11) **EP 0 423 435 B1**
(45) Veröffentlichungstag und Bekanntmachung des Hinweises auf die Patenterteilung: **02.02.1994**
(21) Anmeldenummer: 90113918.8
(22) Anmeldetag: 20.07.1990
(51) Int. Cl.: F02M 35/024, B01D 46/24, B01D 46/52

(54) **Luftfilter mit radial abdichtendem Filtereinsatz**
Air filter with radial sealing filter insert
Filtre d'air avec cartouche filtrante étanchante radialement

(30) Priorität: 14.10.1989 DE 3934433
(43) Veröffentlichungstag der Anmeldung: 24.04.1991
(73) Patentinhaber: FILTERWERK MANN & HUMMEL GMBH, D-71631 Ludwigsburg (DE)
(72) Erfinder: Binder, Walter, D-7150 Backnang-Steinbach (DE); Erdmannsdörfer, Hans, D-7140 Ludwigsburg (DE); Henning, Gerhard, D-7121 Ingersheim (DE); Sommer, Bruno, D-7140 Ludwigsburg (DE)
(74) Vertreter: Voth, Gerhard, Dipl.-Ing.

(56) Entgegenhaltungen:
- US-A- 4 227 898
- US-A- 4 759 783

## Beschreibung

Die Erfindung betrifft ein Luftfilter für eine Verbrennungskraftmaschine insbesondere eines Fahrzeugs nach dem Oberbegriff des Hauptanspruchs.

In der DE-OS 18 15 065 ist ein Luftfilter für eine Verbrennungskraftmaschine beschrieben, bei welchem ein Filtereinsatz mit einer scheibenförmigen Dichtung versehen ist, welche den Rohluftraum von dem Reinluftraum abdichtet. Die dort gezeigte Dichtung ist an dem Filtereinsatz dadurch befestigt, daß an einer Endscheibe des Filtereinsatzes ein Flansch angeordnet ist, welcher in Verbindung mit der Endscheibe eine Ringnut bildet, in welche die Dichtung stramm sitzend eingepaßt ist. Beim Einbauen des Filtereinsatzes in das Gehäuse gleitet diese Dichtung an der Gehäuseinnenwandung entlang, bis der Filtereinsatz seine Einbaulage erreicht hat.

Ein Nachteil dieser Dichtung besteht darin, daß beim Einbau des Filtereinsatzes die Dichtung stark verformt wird und sich entgegen der Einbaurichtung wölbt. Dies kann dazu führen, daß in eingebautem Zustand kein absolut sicheres Abdichten des Reinluftraumes gewährleistet ist und damit die Gefahr des Eintretens von ungefilterter Luft in den Reinluftraum besteht.

Gerade bei der Verwendung eines Luftfilters in Kraftfahrzeugen ist mit Schwingungen unterschiedlicher Frequenz zu rechnen. Diese Schwingungen können dazu führen, daß das Luftfilter in eine Resonanzschwingung gerät. Auch in diesem Fall muß die Dichtung für ein sicheres Abdichten sorgen. Bei der bekannten Dichtung besteht jedoch die Gefahr, daß aufgrund der geringen wirksamen Dichtfläche und geringen Steifigkeit der Dichtung bei Schwingungen ebenfalls Dichtheitsprobleme entstehen.

Eine ähnliche Art der Dichtung ist auch aus der US-A- 4 227 898 bekannt. Dort ist die Dichtung in Form eines O-Ringes an einem Stützring angelegt. Es ist eine zusätzliche Scheibe erforderlich, die den Dichtring in seiner Position fixiert. Diese Dichtung sorgt bei einem Luftfilter einer Verbrennungskraftmaschine dafür, daß eine Abdichtung zwischen Rohluft- und Reinluftraum erfolgt.

Ein Nachteil dieser Dichtungsanordnung besteht darin, daß die Dichtung vor dem Einbau in das Luftfiltergehäuse sehr leicht aus ihrer Lage herausgleiten kann und damit die Gefahr besteht, daß ein Filtereinsatz in das Luftfiltergehäuse eingebaut wird, der keine Dichtung aufweist. Eine fehlende Dichtung führt unweigerlich zum Ansaugen von ungereinigter Luft und hat zur Folge, daß die Verbrennungskraftmaschine nach kürzester Zeit aufgrund von Verschleißerscheinungen zerstört wird.

Es ist weiterhin aus dem deutschen Gebrauchsmuster 19 34 075 eine mit einer Dichtung versehene Verbindung zweier zylindrischer Körper zu entnehmen. Die Dichtung ist dort mit zwei nach entgegengesetzten Seiten gekehrten Dichtlippen versehen. Diese Dichtung soll vor allem bei unterschiedlichen Druckverhältnissen für ein sicheres Abdichten der beiden Teile sorgen.

Ein Nachteil dieser bekannten Einrichtung besteht hier darin, daß insbesondere beim Zusammen- bzw. Auseinanderbauen der beiden abzudichtenden Teile die Gefahr besteht, daß die Dichtung sich einrollt oder zwischen den Teilen verspannt und dabei beschädigt wird. Außerdem ist die Art der Dichtung aufwendig in der Herstellung und daher bei der Verwendung in Luftfiltern nicht geeignet.

Ausgehend von der US-A- 4 227 898 liegt der Erfindung die Aufgabe zugrunde, ein Luftfilter für eine Verbrennungskraftmaschine zu schaffen, bei dem ein zuverlässiges Abdichten des Reinluftraums gegenüber dem Rohluftraum mit einer kostengünstigen Dichtung erzielt wird.

Diese Aufgabe wird, ausgehend von dem Oberbegriff des Hauptanspruchs, durch dessen kennzeichnende Merkmale gelöst.

Während bei der o.g. Entgegenhaltung DE-GM 19 34 075 der Befestigungsbereich für die Dichtung außerhalb des Dichtbereichs und damit zum einen an einer ungeschützten Stelle liegt und zum anderen den erforderlichen Durchmesser für den gesamten Aufbau erheblich vergrößert, ist der wesentliche Vorteil der erfindungsgemäßen Lösung die kompakte Bauweise dieser Radialdichtung. So wird durch die konstruktive Ausgestaltung der Radialdichtung und durch die Befestigungsart erreicht, daß die Dichtung so angeordnet werden kann, daß kein zusätzlicher Bauraum für deren Befestigung beansprucht wird. Der Aufbau erlaubt damit eine optimale Ausnutzung der Filtergehäuselänge und des Filtergehäusedurchmessers.

Ein weiterer Vorteil des Luftfilters besteht darin, daß der Befestigungsbereich der Dichtung unmittelbar neben dem Dichtbereich angeordnet ist und somit zunächst diese beiden Funktionen entkoppelt sind, andererseits jedoch nicht die Gefahr besteht, daß der Dichtbereich beim Ein- bzw. Ausbauen des Einsatzes nicht genügend gesichert ist und sich dadurch einrollt oder verkantet.

Gemäß einer Weiterbildung der Erfindung wird vorgeschlagen, daß der Befestigungsring sich bis an den Dichtbereich der Radialdichtung erstreckt. Dadurch wird der Dichtbereich beim Einbauen des Filtereinsatzes abgestützt, so daß axiale Kräfte auf die Dichtung wirksam abgefangen werden können. In einer vorteilhaften Ausgestaltung kann der Befestigungsring für die Radialdichtung gleichzeitig als Endscheibe ausgebildet sein. Dadurch werden erhebliche Herstellungskosten eingespart. Außerdem hat ein einstückig ausgebildeter Ring den Vorteil, daß keine Dichtheitsprobleme an zusätzlichen Verbindungsstellen auftreten können.

Zur Erhöhung der Elastizität der Radialdichtung kann diese dahingehend weiter ausgebildet sein, daß durch besondere Ausformung der Dichtung zwischen derselben und dem Befestigungsring ein Hohlraum entsteht, so daß die Dichtung im unbelasteten Zustand lediglich an ihren beiden äußeren Enden ringförmig an dem Befestigungsring aufliegt. Im eingebauten Zustand wird durch den Anpreßdruck zwischen rohrförmigem Ansatz und Dichtung diese weitgehend über ihre gesamte Dichtfläche sich an den Befestigungsring anlegen.

Die Erfindung kann dahingehend weitergebildet sein, daß die Radialdichtung an der dem rohrförmigen Ansatz zugewandten Dichtfläche konisch geformt ist, so daß das Einbauen des Filtereinsatzes in das Filtergehäuse erleichtert wird. Ebenso kann natürlich auch der rohrförmige Ansatz an seinem dem Filtereinsatz zugewandten Ende eine Verjüngung aufweisen. Dies trägt ebenfalls zur einfacheren Montage des Filtereinsatzes bei.

Insgesamt wird durch die konstruktive Ausgestaltung der Dichtung und der Befestigungsart ein sicheres Abdichten der Reinluftseite des Luftfilters auch bei den in Fahrzeugen auftretenden Schwingungen erzielt.

Weitere vorteilhafte Ausgestaltungen sind in den Unteransprüchen und der Beschreibung enthalten.

Anhand eines Ausführungsbeispiels wird nachfolgend die Erfindung näher erläutert. Es zeigt
- Figur 1: ein Luftfiltergehäuse in Schnittdarstellung
- Figur 2: in einer Detaildarstellung Aufbau und Befestigung der Radialdichtung.

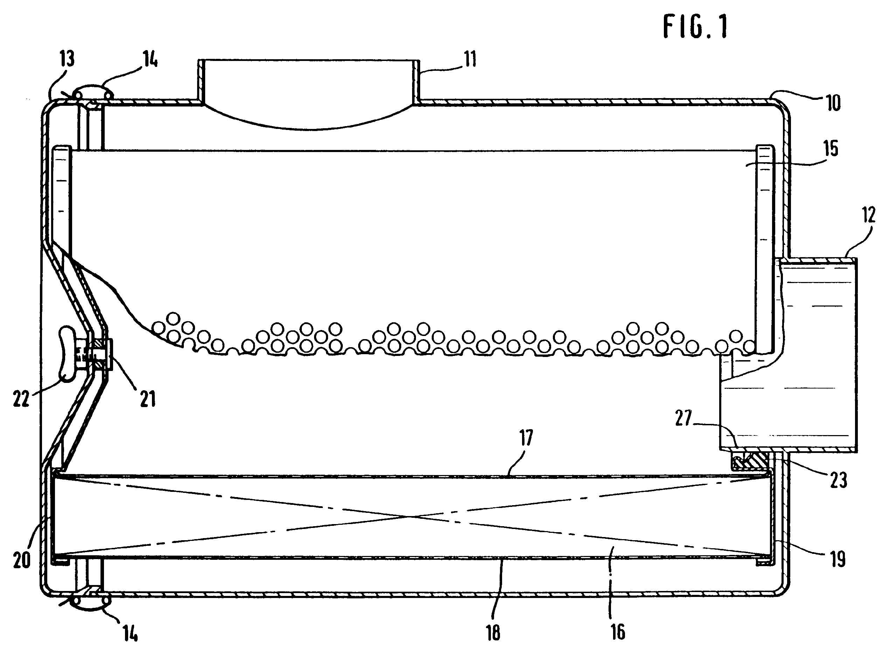

Das in Figur 1 gezeigte Luftfilter besteht aus einem Gehäuse 10, welches einen Rohlufteinlaß 11 und einen Reinluftauslaß 12 aufweist. Das Gehäuse ist an seinem dem Reinluftauslaß gegenüberliegenden Ende mit einem Gehäusedeckel 13 verschlossen. Mehrere am Umfang verteilt angeordnete Verschlüsse 14 sorgen für eine sichere Befestigung des Gehäusedeckels.

Der Reinluftauslaß 12 des Gehäuses ist ein rohrförmiger Ansatz 27, der sich sowohl nach außen als auch teilweise nach innen in das Gehäuse erstreckt.

Ein Filtereinsatz 15 besteht in bekannter Weise aus einem sternförmig gefalteten Filterpapier 16, welches zwischen einer inneren Stützhülse 17 und einer äußeren Stützhülse 18 angeordnet ist. Die Stirnflächen des Filtereinsatzes 15 sind mit Endscheiben 19, 20 geschlossen. Die Endscheibe 20 ist in ihrem Zentrum mit einem Schraubansatz 21 versehen. Über diesen Schraubansatz wird der Filtereinsatz 15 mit einer Flügelmutter 22 an dem Gehäusedeckel 23 angeschraubt.

An der gegenüberliegenden Stirnseite ist der Einsatz 17 mit einer Endscheibe 19 versehen, die eine Radialdichtung 23 trägt. Diese Radialdichtung 23 liegt an dem nach innen gezogenen Ansatz 27 des Reinluftauslasses 12 an.

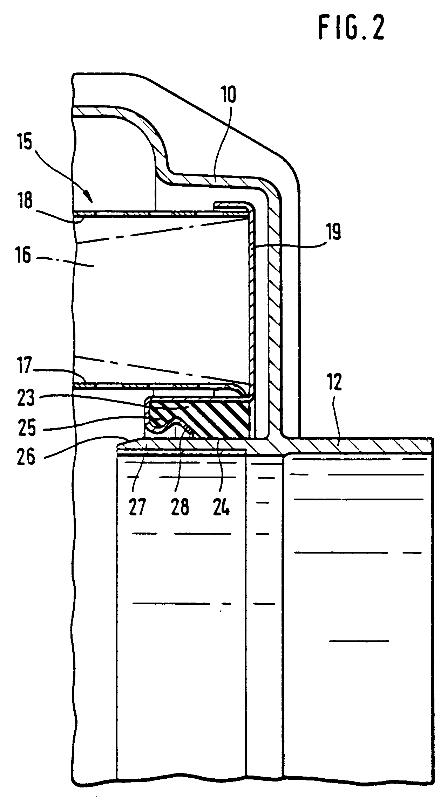

In der Figur 2 ist die konstruktive Gestaltung des Dichtungsbereichs mit dem Aufbau der Dichtung näher dargestellt. Das Gehäuse 10 mit dem Reinluftauslaß 12 ist hier nur teilweise dargestellt. In dem Gehäuse ist der dem Reinluftauslaß zugewandte Bereich des Filtereinsatzes 15 sichtbar.

Die Endscheibe 19 dieses Filtereinsatzes erstreckt sich längs der Stützhülse 17 und umfaßt bis in die Nähe des Dichtungsbereichs 24 die Radialdichtung 23. Die Dichtfläche 28 der Endscheibe 19, welche sich bis nahe an den Dichtungsbereich 24 erstreckt, hat die Aufgabe, die Radialdichtung beim Einschieben des Filtereinsatzes 15 auf den rohrförmigen Ansatz 27 zu stützen. Die Radialdichtung 23 ist so ausgeformt, daß ein Befestigungsbereich durch eine wulstartige Erhöhung 25 gebildet ist und nach einer geringfügigen Einkerbung der Bereich erfolgt, welcher die Abdichtung zwischen dem Rohluftraum und dem Reinluftraum bewirkt. Die Radialdichtung 23 ist an ihrem Dichtungsbereich 24 leicht konisch mit nach außen sich erweiterndem Konus ausgebildet (im eingebauten Zustand nicht sichtbar), so daß ein einfaches Aufschieben des Filtereinsatzes 15 auf den Reinluftauslaß möglich ist. Der Luftauslaß besitzt außerdem einen sich verjüngenden Bereich 26, der das Aufschieben des Filtereinsatzes erleichtert.

Die wirksame Dichtfläche der Radialdichtung an dem Ansatz 27 des Reinluftauslasses ist so groß gewählt, daß eine gute Dämpfungswirkung bei von außen angeregten Schwingungen erzielt wird und somit bei allen Betriebsbedingungen ein sicheres Abdichten gewährleistet ist.

Die Länge des Dichtungsbereichs 24 ist außerdem von Vorteil bei geringfügigen Längenunterschieden des Filtereinsatzes 15. Durch einen derart gestalteten Dichtungsbereich wird vermieden, daß beim Austausch des Filtereinsatzes solche Längenunterschiede dazu führen, daß rohluftseitig abgesetzter Schmutz an dem Ansatz 27 nunmehr aufgrund eines etwas längeren neuen Filtereinsatzes sich auf der Reinluftseite befindet.

### Bezugszeichenliste

- 10: Gehäuse
- 11: Rohlufteinlaß
- 12: Reinluftauslaß
- 13: Gehäusedeckel
- 14: Verschluß
- 15: Filtereinsatz
- 16: Filterpapier
- 17: Stützhülse
- 18: Stützhülse
- 19: Endscheibe
- 20: Endscheibe
- 21: Schraubansatz
- 22: Flügelmutter
- 23: Radialdichtung
- 24: Dichtungsbereich
- 25: Wulst
- 26: Bereich
- 27: Ansatz
- 28: Stützfläche

## Patentansprüche

1. Luftfilter für eine Verbrennungskraftmaschine insbesondere eines Fahrzeugs, mit einem Gehäuse, welches einen rohluftseitigen Lufteinlaß und einen reinluftseitigen Luftauslaß aufweist, wobei der Luftauslaß mit einem in den Innenraum des Gehäuses und in den Filtereinsatz hineinragenden rohrförmigen Ansatz versehen ist und ein ringförmiger Filtereinsatz in dem Gehäuse lösbar befestigt ist, wobei der Filtereinsatz radial von außen nach innen durchströmt wird und an der dem rohrförmigen Ansatz zugewandten Stirnseite eine Radialdichtung vorgesehen ist, welche an dem rohrförmigen Ansatz anliegt und den Rohluftraum von dem Reinluftraum abdichtet, und wobei die Radialdichtung einen Dichtbereich aufweist, der die Abdichtung zwischen dem rohrförmigen Ansatz und dem Filtereinsatz bewirkt, dadurch gekennzeichnet, daß die Radialdichtung (23) in dem abzudichtenden Zwischenraum einen weiteren Bereich mit einer gegenüber der radialen Breite des abzudichtenden Zwischenraums geringeren radialen Baubreite aufweist, wobei dieser Bereich mit einem Ringwulst (25) versehen ist und der Dichtbereich der Radialdichtung (23) in axialer Richtung neben dem weiteren Bereich angeordnet ist und wobei an dem Filtereinsatz (15) ein einstückiger Befestigungsring (19) angeordnet ist, an welchem die Radialdichtung (23) anliegt und welcher den Ringwulst (25) des weiteren Bereichs umfaßt.

2. Luftfilter nach Anspruch 1, dadurch gekennzeichnet, daß der Befestigungsring (19) einen Teil des zweiten Bereiches der Radialdichtung (23) überdeckt, derart, daß axial wirkende Kräfte auf den zweiten Bereich, welche gegen den Befestigungsring (19) gerichtet sind, von diesem aufgenommen werden.

3. Luftfilter nach Anspruch 1 oder 2, dadurch gekennzeichnet, daß der Befestigungsring (19) sich die gesamte Stirnseite des Filtereinsatzes (15) erstreckt und als Endscheibe ausgebildet ist.

4. Luftfilter nach einem der vorhergehenen Ansprüche, dadurch gekennzeichnet, daß die dem Filtereinsatz (15) zugewandte Dichtfläche der Radialdichtung (23) eine leichte, nach innen gerichtete Wölbung aufweist, so daß die Dichtung (23) im unbelasteten Zustand nur an den äußeren Bereichen der Dichtfläche auf der Endscheibe (19) aufliegt.

5. Luftfilter nach einem der vorhergehenden Ansprüche, dadurch gekennzeichnet, daß die dem rohrförmigen Ansatz (27) zugewandte Dichtfläche (24) konisch ausgebildet ist, derart, daß ein Aufschieben des mit der Radialdichtung (23) versehenen Filtereinsatzes (15) auf den rohrförmigen Ansatz (27) erleichtert ist.

## Claims

1. Air filter for an internal combustion engine, more especially of a vehicle, having a housing which includes an air inlet at the unfiltered air end and an air outlet at the purified air end, the air outlet being provided with a tubular extension, which extends into the interior of the housing and into the filter insert, and an annular filter insert being detachably mounted in the housing, the filter insert being traversed radially from externally inwardly, and a radial seal being provided on the end face facing the tubular extension, which seal abuts against the tubular extension and seals the unpurified air chamber from the purified air chamber, and the radial seal having a sealing region, which effects the seal between the tubular extension and the filter insert, characterised in that the radial seal (23) has, in the intermediate space to be sealed, an additional region with a radial overall width which is smaller than the radial width of the intermediate space to be sealed, this region being provided with an annular bead (25), and the sealing region of the radial seal (23) being disposed adjacent the additional region when viewed with respect to the axial direction, and a one-piece securing ring (19) being disposed on the filter insert (15), the radial seal (23) abutting against said ring which surrounds the annular bead (25) of the additional region.

2. Air filter according to claim 1, characterised in that the securing ring (19) covers a portion of the second region of the radial seal (23) in such a manner that forces, which act axially upon the second region and are directed towards the securing ring (19), are absorbed by said ring.

3. Air filter according to claim 1 or 2, characterised in that the securing ring (19) extends over the entire end face of the filter insert (15) and is in the form of an end disc.

4. Air filter according to one of the preceding claims, characterised in that the sealing face of the radial seal (23), facing the filter insert (15), has a slight, inwardly orientated curvature, so that the seal (23) only rests on the end disc (19) at the outer regions of the sealing face in the unloaded state.

5. Air filter according to one of the preceding claims, characterised in that the sealing face (24), facing the tubular extension (27), has a conical configuration, so that it is easier for the filter insert (15), which is provided with the radial seal (23), to slide over the tubular extension (27).

## Revendications

1. Filtre à air pour un moteur à combustion interne, en particulier d'un véhicule, comprenant un boîtier avec une entrée d'air du côté de l'air à l'état brut et une sortie d'air du côté de l'air purifié, filtre dans lequel la sortie d'air est munie d'un raccord tubulaire pénétrant à l'intérieur du boîtier et dans la cartouche du filtre ; une cartouche filtrante annulaire est fixée de manière détachable dans le boîtier ou la cartouche filtrante est parcourue par le flux venant radialement de l'extérieur vers l'intérieur et une garniture d'étanchéité radiale est prévue sur la face frontale tournée vers le raccord tubulaire, garniture qui adhère au raccord tubulaire et isole l'espace de l'air brut de l'espace de l'air purifié, et la garniture radiale comporte une zone d'étanchéité, qui assure l'étanchéité entre le raccord tubulaire et la cartouche filtrante, caractérisé en ce que la garniture d'étanchéité radiale (23) comporte dans le volume intermédiaire à étancher une autre zone avec une largeur de construction radiale faible vis-à-vis de la largeur radiale du volume intermédiaire à rendre étanche, cette zone est munie d'un bourrelet annulaire (25) et la zone d'étanchéité de la garniture radiale (23) est disposée dans le sens axial à côté de l'autre zone et un anneau de fixation en une pièce étant placé sur la cartouche filtrante (15), anneau auquel adhère la garniture radiale (23) et qui entoure le bourrelet annulaire (25) de l'autre zone.

2. Filtre à air selon la revendication 1, caractérisé en ce que l'anneau de fixation (19) recouvre une partie de la deuxième zone de la garniture radiale (23), de manière que des efforts agissant axialement sur la deuxième zone, dirigés vers l'anneau de fixation (19), soient absorbés par celui-ci.

3. Filtre à air selon les revendications 1 ou 2, caractérisé en ce que l'anneau de fixation (19) s'étend sur toute la face frontale de la cartouche filtrante (15) et est réalisé comme un flasque terminal.

4. Filtre à air selon une des revendications précédentes, caractérisé en ce que la surface d'étanchéité de la garniture radiale (23) tournée vers la cartouche filtrante (15) a une légère courbure dirigée vers l'intérieur, de sorte que la garniture (23) à l'état non chargé appuie contre le flasque terminal (19) seulement sur les zones extérieures de la surface d'étanchéité.

5. Filtre à air selon une des revendications précédentes, caractérisé en ce que la surface d'étanchéité (24) est réalisée conique, de manière à faciliter un coulissement de la cartouche filtrante (15) munie de la garniture radiale (23) sur le raccord tubulaire (27).
